# EUROPEAN PATENT APPLICATION

(11) **EP 4 593 462 A1**
(43) Date of publication of application: **30.07.2025**
(21) Application number: 24822340.6
(22) Date of filing: 27.03.2024
(51) Int. Cl.: H04W 36/00

(54) **CONDITIONAL HANDOVER METHOD, COMMUNICATION NODE, AND STORAGE MEDIUM**

(30) Priority: 14.06.2023 CN 202310705971
(71) Applicant: ZTE Corporation, Shenzhen, Guangdong 518057 (CN)
(72) Inventor: XU, Hui, Shenzhen, Guangdong 518057 (CN); JI, Zhongwei, Shenzhen, Guangdong 518057 (CN); HUA, Xiaoquan, Shenzhen, Guangdong 518057 (CN); DING, Jianfeng, Shenzhen, Guangdong 518057 (CN)
(74) Representative: Aipex B.V.
(86) International application number: PCT/CN2024/083956
(87) International publication number: WO 2024/255385

(57) **Abstract**

Provided are a conditional handover method, a communication node, and a storage medium. The method includes: in response to determining that a second communication node performs a conditional handover, acquiring configuration information of at least one candidate cell; and sending a first message to the second communication node, where the first message includes the configuration information of the at least one candidate cell and a conditional handover execution condition, the first message is used to instruct the second communication node to select at least one candidate cell meeting the execution condition from the at least one candidate cell as a target cell and to perform a handover to the target cell according to the configuration information, where in response to the target cell being a non-terrestrial network cell, the execution condition includes a reference signal condition and an execution state condition.

## Description

### TECHNICAL FIELD

The present application relates to wireless communication networks, for example, a method for a conditional handover, a communication node, and a storage medium.

### BACKGROUND

In a non-terrestrial network (NTN), the primary consideration for handover in an NTN system is how to ensure handover reliability by using ephemeris data and location information of a terminal. Radio resource management (RRM) measurement serves as the primary handover basis for terrestrial system handover. However, in satellite communications, handover not only depends on RRM measurement but also requires full utilization of the location of a terminal and the beam movement pattern of a satellite. A base station antenna of the NTN is carried by a satellite (with an altitude of 600 to 35786 km) or a high-altitude platform (with an altitude of 8 to 20 km). Therefore, in an NTN cell, the difference in a reference signal received power (RSRP) or a reference signal received quality (RSRQ) between the center and edge of the cell is not significant. In addition, due to weather-related impairments (such as rain attenuation or fog attenuation) in the propagation of satellite-terrestrial signals, the edge effects in the NTN cell become even more indistinct. In such scenarios, it is challenging for the network to configure an appropriate RSRP or RSRQ threshold. Excessively high threshold may lead to delayed triggering of measurement reporting, conditional handover, and neighboring cell measurement, while overly low threshold may result in premature or frequent triggering, thereby causing low reliability of the conditional handover.

### SUMMARY

The present application provides a method for a conditional handover, a communication node, and a storage medium.

An embodiment of the present application provides a method for a conditional handover. The method is performed by a first communication node and includes the following.

In response to determining that a second communication node performs a conditional handover, configuration information of at least one candidate cell is acquired.

A first message is sent to the second communication node, where the first message includes the configuration information of the at least one candidate cell and a conditional handover execution condition, the first message is used to instruct the second communication node to select at least one candidate cell meeting the execution condition from the at least one candidate cell as a target cell and to perform the handover to the target cell according to the configuration information.

In response to the target cell being a non-terrestrial network cell, the execution condition includes a reference signal condition and an execution state condition.

An embodiment of the present application further provides a method for a conditional handover. The method is performed by a second communication node and includes the following.

A first message is received, where the first message includes configuration information of at least one candidate cell and a conditional handover execution condition.

At least one candidate cell meeting the execution condition is selected from the at least one candidate cell as a target cell, and handover is performed to the target cell according to the configuration information.

In response to the target cell being a non-terrestrial network cell, the execution condition includes a reference signal condition and an execution state condition.

An embodiment of the present application further provides a communication node. The communication node includes a memory, a processor, and a computer program stored in the memory and executable by the processor, where the processor executes the computer program to perform the preceding method for a conditional handover.

An embodiment of the present application further provides a computer-readable storage medium. The computer-readable storage medium is configured to store a computer program which, when executed by a processor, causes the processor to perform the preceding method for a conditional handover.

### BRIEF DESCRIPTION OF DRAWINGS

FIG. 1 is a flowchart of a method for a conditional handover according to an embodiment;
FIG. 2 is another flowchart of a method for a conditional handover according to an embodiment;
FIG. 3 is a schematic diagram of a transparent forwarding satellite-based non-terrestrial network according to an embodiment;
FIG. 4 is a schematic diagram of a regenerative forwarding satellite-based non-terrestrial network according to an embodiment;
FIG. 5 is a schematic diagram of the implementation of a conditional handover procedure according to an embodiment;
FIG. 6 is a structure diagram of a conditional handover apparatus according to an embodiment;
FIG. 7 is another structure diagram of a conditional handover apparatus according to an embodiment; and
FIG. 8 is a structure diagram of the hardware of a communication node according to an embodiment.

### DETAILED DESCRIPTION

The present application is described hereinafter in conjunction with the drawings and embodiments. It is to be understood that the embodiments described herein are intended to explain the present application and not to limit the present application. It is to be noted that if not in collision, embodiments of the present application and features therein may be combined with each other in any manner. In addition, it is to be noted that for ease of description, only part, not all, of structures related to the present application are illustrated in the drawings.

The NTN is divided into two major scenarios: transparent forwarding (also known as bent-pipe forwarding) and regenerative forwarding. In the transparent forwarding scenario, the role played by a satellite is a radio frequency relay, both a service link and a feeder link use 5G Uu interfaces, an NTN ground station or an NTN gateway only transparently transmits Uu interface signals of the new radio (NR), and different transparent satellites may connect to the same ground base station (for example, a ground next Generation Node B (gNB)). In the regenerative forwarding scenario, the role played by the satellite is a spaceborne base station (for example, a spaceborne gNB-Distributed Unit (DU) or a spaceborne gNB), the service link uses an NR Uu interface, the feeder link uses a satellite radio interface (SRI), and different spaceborne gNBs may connect to the same ground 5G core network.

The NTN scenarios mainly target satellite communications and low-altitude communications (for example, low-altitude platforms) whose differences from terrestrial communications are mainly in long delay, large coverage, and satellite movement. Since mobility management is particularly important for the continuity of network connections and services, it is necessary to take into full consideration the characteristics of a variety of networks and wireless resource limitations, especially the altitude and movement speed of satellites, as well as the resulting challenges such as long propagation delay and cell dynamic changes. How to achieve lossless mobility management between satellite networks and terrestrial networks to reduce service interruption and even provide users with undifferentiated service experience is an urgent problem to be solved.

The present application provides a method for a conditional handover which adopts appropriate execution conditions for the conditional handover and thus can improve the reliability of the conditional handover and reduce service interruption and transmission delay during communications. The method may be achieved through the interactions between a first communication node (mainly referring to a satellite or a network device) and a second communication node (mainly referring to a terminal device). The terminal device may be a user equipment (UE) or an in-vehicle device or may be understood as a module (for example, a chip) in the terminal device. The satellite may include, but is not limited to, a geostationary satellite, a non-geostationary satellite, an artificial satellite, a low-earth orbit satellite, a medium-earth orbit satellite, and a high-earth orbit satellite. Moreover, the satellite may also include a transparent forwarding satellite and a regenerative forwarding satellite. The network device may include, but is not limited to, an evolved Node B (eNB), a radio network controller (RNC), a Node B (NB), a base station controller (BSC), a base transceiver station (BTS), a home base station (for example, a home evolved Node B or Home Node B (HNB)), a baseband unit (BBU), an access point (AP) in a wireless fidelity (WIFI) system, a radio relay node in the WIFI system, a radio backhaul node, and a transmission and reception point (TRP or a transmission point (TP)) in the WIFI system, or may also include a gNB or a transmission point (TRP or TP) in a 5G (such as NR) system, one or a group of (including a plurality of) antenna panels of a base station in a 5G system, and a network node constituting a gNB or a transmission point (for example, a baseband unit (BBU), a distributed unit (DU) or a drone). In some deployments, the gNB may include a centralized unit (CU) and a distributed unit (DU), and may also include a radio unit (RU).

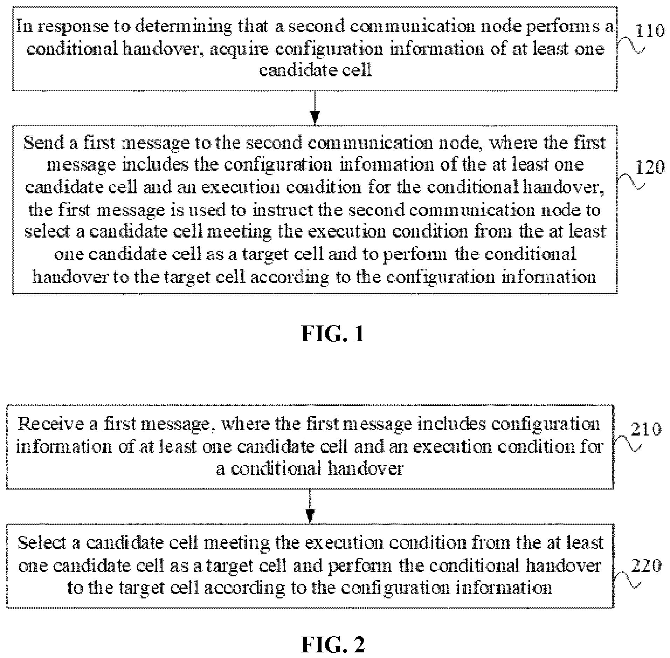

FIG. 1 is a flowchart of a method for a conditional handover according to an embodiment. The method is applicable to the first communication node. As shown in FIG. 1, the method provided in this embodiment includes 110 and 120.

In 110, in response to determining that a second communication node performs a conditional handover, configuration information of at least one candidate cell is acquired.

In 120, a first message is sent to the second communication node, where the first message includes the configuration information of the at least one candidate cell and a conditional handover execution condition, the first message is used to instruct the second communication node to select at least one candidate cell meeting the execution condition from the at least one candidate cell as a target cell and to perform the conditional handover to the target cell according to the configuration information.

In response to the target cell being a non-terrestrial network cell, the execution condition includes a reference signal condition and an execution state condition.

In this embodiment, the first communication node may receive a measurement report of the second communication node, and when the first communication node determines that the first communication node performs a conditional handover (CHO), the first communication node acquires configuration information of the at least one candidate cell. The at least one candidate cell mainly refers to a cell capable of serving as the target of the conditional handover, and the number of the at least one candidate cell may be one or more. After the first communication node determines that the conditional handover needs to be performed, the first communication node may send a request message to a neighboring base station, and the neighboring base station selects the at least one candidate cell and sends the configuration information of the at least one candidate cell to the first communication node. The communication node sends a first message to a UE, where the first message includes the configuration information of the at least one candidate cell and a conditional handover execution condition. On the basis of the above, the second communication node is instructed through the first message to evaluate each candidate cell according to the execution condition, and when the second communication node finds at least one candidate cell meeting the execution condition, the second communication node may take the at least one candidate cell meeting the execution condition as the target cell of the conditional handover and performs handover to the target cell according to the configuration information of the target cell. During the execution of the CHO, the second communication node may no longer listen to a source cell once the second communication node starts synchronizing with the target cell.

The execution condition includes a reference signal condition and an execution state condition. The reference signal condition is used to define, for example, an RSRP threshold or an RSRQ threshold for the conditional handover. The execution state condition may be used to define the state of the second communication node when the second communication node performs the conditional handover. The execution state condition may include a location condition. The location condition is used to define, for example, the location at which the second communication node is capable of performing a conditional handover or the distance from the second communication node to a network side node. The execution state condition may also include a time condition. The time condition is used to define, for example, a time period during which the second communication node is capable of performing a conditional handover. The reference signal condition may be configured together with the location condition or may be configured together with the time condition. In some scenarios, the reference signal condition, the location condition, and the time condition may be configured together.

It is to be noted that the source cell where the second communication node is located before the second communication node performs the conditional handover may be a terrestrial network or a non-terrestrial network, and the target cell may be a non-terrestrial network. The candidate cell and the source cell where the second communication node is located may be located in the same satellite coverage or different satellite coverages.

The communication between the first communication node and the second communication node may also be achieved through a network device, and the network device includes at least one of the following: a ground base station or a spaceborne base station. The network device and the second communication node both know the at least one candidate cell and the conditional handover execution condition. The network device may determine the configuration information of the at least one candidate cell and the execution condition, and send the determined configuration information and the determined execution condition to the second communication node so that the second communication node performs the conditional handover.

The first communication node may send a first message to each second communication node through dedicated radio resource control (RRC) signaling, and after each second communication node receives the first message, each second communication node may select a target cell meeting the execution condition according to the first message, disconnect the connection with the source cell, and connect to the target cell through the satellite to which the target cell belongs, thereby achieving the conditional handover.

The first message may be sent after the connection security between the second communication node and the first communication node is activated.

In this embodiment, the execution condition and the at least one candidate cell are not determined in real-time calculation but are pre-configured before the conditional handover is performed, so that the signaling overhead is relatively reduced and the processing delay is reduced. Moreover, in addition to the reference signal condition, the execution condition also takes into account the location condition and/or the time condition of a satellite service according to the characteristics of NTN communications. On the basis of the above, the success rate of the conditional handover can be improved, the second communication node can be prevented from performing handover prematurely or belatedly, frequent handovers can be avoided, and the service quality can be improved.

In an embodiment, in response to the at least one candidate cell meeting the execution condition including a terrestrial network candidate cell and a non-terrestrial network candidate cell, the target cell is the terrestrial network candidate cell.

In this embodiment, in response to the at least one candidate cell meeting the execution condition including a terrestrial network candidate cell and a non-terrestrial network candidate cell, the second communication node preferentially selects the terrestrial network candidate cell as the target cell.

In an embodiment, the terrestrial network candidate cell and the non-terrestrial network candidate cell are distinguished through a field in a cell system broadcast message and correspond to different execution conditions.

In an embodiment, the method further includes: determining whether the second communication node performs the conditional handover according to at least one of: a measurement report, the capability of the second communication node, the location of the second communication node, or a satellite ephemeris, where the capability of the second communication node includes the capability to support non-terrestrial network communications, and moreover, the capability to support global navigation satellite system (GNSS) positioning or cellular network positioning.

The capability of the second communication node mainly refers to whether the second communication node supports NTN communications. If the source cell is an NTN cell, it indicates that the second communication node has NTN communication capability; and if the source cell is a terrestrial network, the first communication node acquires the NTN communication capability of the second communication node through RRC signaling. The location of the second communication node may refer to geographical location information, and the second communication node may acquire the location information through positioning, such as GNSS positioning or cellular network positioning.

For example, the conditional handover may be performed in the case where the measurement report of the second communication node indicates that the neighboring cell or the candidate cell is a non-terrestrial network cell; the conditional handover may be performed in the case where the second communication node has the NTN capability; the conditional handover may be performed in the case where the second communication node enters a non-terrestrial network; and the conditional handover may be performed in the case where the second communication node enters the satellite coverage area.

In an embodiment, the execution conditions may be determined according to the satellite ephemeris (information of the satellite ephemeris may indicate star orbit parameters, the star orbit of each satellite is fixed, but the star orbits of different satellites may be different), the location of the second communication node (for example, the distance from the second communication node to a cell reference point (for example, a cell center)), and the reference signal condition (measurement criterion based on an RSRP or an RSRQ).

The execution conditions corresponding to different satellites may be different, and the determined execution conditions of the same satellite at different time points may also be different, which is not specifically limited in the present application.

In an embodiment, the configuration information of the at least one candidate cell includes a cell identifier and cell resource configuration information; or the configuration information of the at least one candidate cell includes the cell identifier, the cell resource configuration information, and at least one of a synchronization signal/physical broadcast channel (SS/PBCH) block measurement timing configuration (SMTC) or channel state information reference signal (CSI-RS) resource location information; and in response to the at least one candidate cell meeting the execution condition being a non-terrestrial network cell, at least two SMTCs are provided.

In this embodiment, a candidate base station may send the configuration information of the at least one candidate cell to the first communication node, where the configuration information of the at least one candidate cell may at least include the cell identifier and the cell resource configuration information, and may further include at least one of an SMTC or CSI-RS resource location information. The cell identifier may be used to indicate a candidate cell. The cell resource configuration information is used for the second communication node to connect to the at least one candidate cell meeting the execution condition. The resource configuration is a random access resource configuration or a physical uplink shared channel (PUSCH) resource configuration. The SMTC or the CSI-RS is used for the second communication node to evaluate the signal quality of the at least one candidate cell. Each candidate base station needs to send the configuration information of each candidate cell to the first communication node.

In an embodiment, the execution state condition includes at least one of a time condition or a location condition. The time condition is used to indicate a time window in which the second communication node is capable of performing the conditional handover on a candidate cell, and the length of the time window may be T. Within a continuous time range T starting from a defined time point, when the measurement result of the at least one candidate cell meets the reference signal condition, the second communication node may perform a conditional handover. The location condition is used to indicate a first distance threshold from the second communication node to a source cell (which may be the central location of the source cell) and a second distance threshold from the second communication node to a candidate cell (which may be the central location of the candidate cell). The second communication node may perform CHO according to the distance thresholds, that is, when the distance from the second communication node to the source cell is greater than the first distance threshold, the distance from the second communication node to the candidate cell is less than the second distance threshold, and the measurement result of the at least one candidate cell meets the reference signal condition, the second communication node may perform a conditional handover.

In addition, the location condition may be used as a CHO execution condition and a trigger event for reporting the measurement result. The time condition may be used as a CHO execution condition, but not as a trigger event for reporting the measurement result, because in the connected state, the network may configure the measurement result reporting of the second communication node according to a service stop time.

In an embodiment, the reference signal condition is a measurement report trigger event for the conditional handover.

In an embodiment, the first message is sent through RRC reconfiguration signaling.

In an embodiment, the execution condition is determined according to satellite ephemeris information, the location of the second communication node, and a reference signal reception parameter, where the reference signal reception parameter includes an RSRP or an RSRQ.

In an embodiment, the method further includes: determining a time range of the execution condition, where the first message is used to instruct the second communication node to perform a handover to a target cell meeting the execution condition within the time range. In this embodiment, if the at least one candidate cell meeting the execution condition remains valid within the time range, the candidate cell may become the target cell.

In an embodiment, the method further includes: sending conditional handover configuration information, where the conditional handover configuration information includes satellite ephemeris information, a common timing advance (TA) parameter, a start time, and a validity duration.

In an embodiment, the reference signal condition includes at least one of the following conditions.

A reference signal quality of a neighboring cell exceeds a reference signal quality of a designated cell by a preset offset.

A reference signal quality of a neighboring cell is higher than a preset threshold.

A reference signal quality of a designated cell is lower than a first threshold and a reference signal quality of a neighboring cell is higher than a second threshold.

The reference signal includes at least one of a synchronization signal block (SSB) or a CSI-RS.

In this embodiment, the reference signal condition may include at least one of the following conditions.

When the reference signal quality of a neighboring cell exceeds the reference signal quality of a designated cell (for example, a serving cell) by a preset offset, the reference signal condition is met.

When the reference signal quality of a neighboring cell becomes better than a preset threshold, the reference signal condition is met.

When the reference signal quality of a designated cell becomes worse than a first threshold and the reference signal quality of a neighboring cell becomes better than a second threshold, the reference signal condition is met.

The reference signal includes at least one of an SSB or a CSI-RS. The reference signal quality includes at least one of an RSRP, an RSRQ, or a signal-to-interference-plus-noise ratio (SINR).

In an embodiment, the time condition or the location condition may be configured together with one of the reference signal conditions. It is to be noted that if the source cell is an NTN cell, the first message may be directly sent by the satellite and is not carried in the first message but carried through other information or signaling, and the present application does not specifically limit the carrying manner of the first message here.

In an embodiment, the method further includes: sending a user plane configuration of the target cell to the second communication node, where the user plane configuration includes: adding a satellite-terrestrial round-trip time to a timer time of a user plane.

To meet the requirements of user service continuity, dual active protocol stack (DAPS) handover may be introduced, that is, after the second communication node receives a handover command, the second communication node establishes a connection with the target cell while maintaining the connection with the source cell, and then releases the connection with the source cell after the second communication node accesses the target cell. The DAPS handover ensures the continuity of user data transmission during handover by maintaining the dual connectivity between the second communication node and both the source cell and the target cell for a short time and the same user plane configuration. In the case where both the source cell and the target cell are NTN networks, the DAPS may not be adopted considering the power limitation of the second communication node.

In this embodiment, the NTN conditional handover and the DAPS may be adopted at the same time. Considering the difference between the terrestrial network and the non-terrestrial network, especially the long satellite-terrestrial delay in the NTN network, when the source cell is a terrestrial network, the target NTN cell may adopt a user plane configuration different from the user plane configuration of the source cell. The user plane configuration information may be sent by the first communication node to the second communication node before the conditional handover is executed and specifically, the satellite-terrestrial round-trip time (RTT) may be added to the setting of a timer on the user plane, that is, the corresponding timer plus the satellite-terrestrial delay (for example, Timer + 2*RTT).

In an embodiment, the method further includes: sending state information, where the state information includes a packet data convergence protocol (PDCP) number, and the state information is used to indicate the sending state of uplink and downlink data over a Uu air interface.

In this embodiment, after the first communication node sends the first message to the second communication node (or after the first communication node receives a response message from the second communication node), the first communication node may forward user plane data to the candidate base station and indicate state information, where the state information is used to indicate the current sending state of uplink and downlink data, and the state information includes a PDCP number.

In an embodiment, the method further includes: in response to no DAPS handover being configured, forwarding data to the candidate base station after the second communication node accesses a target base station; or in response to a DAPS handover being configured, forwarding data to the candidate base station before the second communication node completes handover.

In this embodiment, if no DAPS handover is configured, the first communication node initiates data forwarding after the first communication node knows that the second communication node has accessed the target base station; or if a DAPS handover is configured, the first communication node forwards data to the candidate base station before the second communication node performs the conditional handover.

In an embodiment, the method further includes: after the second communication node performs the handover to the target cell, sending a state transition message the target base station, and sending a handover cancel message to a candidate base station.

In the method for a conditional handover in this embodiment, the execution condition takes into account a scenario of handover from a TN or an NTN to an NTN, and the execution condition may include: a time condition and a reference signal condition, or may include: a location condition and a reference signal condition, that is, when the execution condition is met, the second communication node may connect to the target cell according to the configuration information, where the configuration information includes a random access resource or a PUSCH uplink resource of the target cell. In addition, the satellite ephemeris information and the TA parameter as well as the time window (which may include a corresponding start time and a validity duration) may be sent in the configuration information for CHO. If the conditional handover fails, the second communication node may initiate cell selection and initiate conditional handover or RRC connection re-establishment in the selected cell according to the instruction of the first communication node. If the random access channel-less (RACH-less) handover fails, the second communication node may initiate a random access procedure. On the basis of the above, the reliability and success rate of the conditional handover are improved, and the service interruption and transmission delay are comprehensively reduced, thereby providing users with undifferentiated service experience.

An embodiment of the present application further provides a method for a conditional handover. The method is applicable to a second communication node. The second communication node mainly refers to a terminal device such as a UE or an in-vehicle device, and may also be understood as a module (such as a chip) in the terminal device. Technical details not exhaustively described in this embodiment can be referred to in any preceding embodiments.

FIG. 2 is another flowchart of a method for a conditional handover according to an embodiment. As shown in FIG. 2, the method provided in this embodiment includes 210 and 220.

In 210, a first message is received, where the first message includes configuration information of at least one candidate cell and a conditional handover execution condition.

In 220, at least one candidate cell meeting the execution condition is selected from the at least one candidate cell as a target cell, and the conditional handover is performed to the target cell according to the configuration information.

In response to the target cell being a non-terrestrial network cell, the execution condition includes a reference signal condition and an execution state condition.

In this embodiment, based on the first message, the second communication node may evaluate each candidate cell according to the execution condition, and when the second communication node finds at least one candidate cell meeting the execution condition, the second communication node may take the at least one candidate cell meeting the execution condition as the target cell of the conditional handover and perform the handover to the target cell according to the configuration information of the target cell. The execution condition and the at least one candidate cell are not determined in real-time calculation but are pre-configured before the conditional handover is performed, so that the signaling overhead is relatively reduced and the processing delay is reduced. Moreover, in addition to the reference signal condition, the execution condition also takes into account an execution state condition according to the characteristics of NTN communications. On the basis of the above, the success rate of the conditional handover can be improved, the second communication node can be prevented from performing handover prematurely or belatedly, frequent handovers can be avoided, and the service quality can be improved.

In an embodiment, the operation where the at least one candidate cell meeting the execution condition is selected from the at least one candidate cell as the target cell includes the following.

In response to the at least one candidate cell meeting the execution condition including a terrestrial network candidate cell and a non-terrestrial network candidate cell, the terrestrial network candidate cell is preferentially selected as the target cell.

In an embodiment, the operation where the handover is performed to the target cell according to the configuration information includes: the handover is performed to the target cell in a random access procedure-less manner according to the configuration information, and an RRC connection with the target cell is established; and in response to the random access procedure-less handover failing or the random access procedure-less handover being disabled, the conditional handover is performed to the target cell based on a random access procedure, where the random access resource is a collision-free dedicated resource.

In this embodiment, to reduce the handover delay, an RACH-less manner may be used for a handover, that is, the second communication node directly sends information through a PUSCH in the target cell without adopting a random access procedure, where assuming that the TA of the target cell is the same as the TA of the source cell, uplink resources of the target cell are pre-configured to the second communication node through a handover command or are dynamically configured in the target cell, and the uplink resources are allocated to the second communication node at a time when the second communication node is available for scheduling in the target cell. If the RACH-less-based handover fails, the second communication node may adopt an RACH-based handover. For example, when the signal quality of the target cell exceeds a designated threshold, a non-collision random access resource may be adopted; otherwise, a collision-based random access resource may be adopted. The above configuration information is sent by a source base station to the second communication node through a handover command.

In an embodiment, the method further includes: during the process where the second communication node performs the conditional handover, in response to a handover command for an unconditional handover being received from a first communication node, performing the unconditional handover.

In this embodiment, before any execution condition is met, if the second communication node receives a handover command (without CHO configuration) for an unconditional handover (HO) from the first communication node, the second communication node performs the conventional HO handover procedure regardless of the received CHO configuration and the first message.

In an embodiment, the method further includes: in response to the conditional handover failing, initiating a cell selection procedure to select a cell; or in response to the selected cell being a candidate cell and an attempt to re-enable the conditional handover being enabled when the conditional handover fails, re-performing the conditional handover; otherwise, initiating an RRC connection re-establishment procedure in the selected cell.

In this embodiment, in response to CHO execution failing, such as radio link failure (RLF), the second communication node performs a cell selection to select a cell. If the selected cell is a candidate cell for CHO and if a network configures the second communication node to attempt another CHO after a CHO fails, the second communication node attempts to re-perform CHO; otherwise, the second communication node performs RRC connection re-establishment. To speed up the processing time, when the conditional handover fails, the second communication node may select a previously registered cell which belongs to a candidate cell to perform CHO, or select a previously registered cell to initiate the RRC connection re-establishment procedure. If the context of the second communication node cannot be retrieved, an RRC connection establishment procedure is performed in the selected cell. In an embodiment, the operation where the handover is performed to the target cell according to the configuration information includes: in response to a DAPS being configured, a connection with the target cell is established while a connection with a source cell is maintained, and the connection with the source cell is released after accessing the target cell; or in response to no DAPS being configured, a connection with a source cell is disconnected, and the target cell is connected.

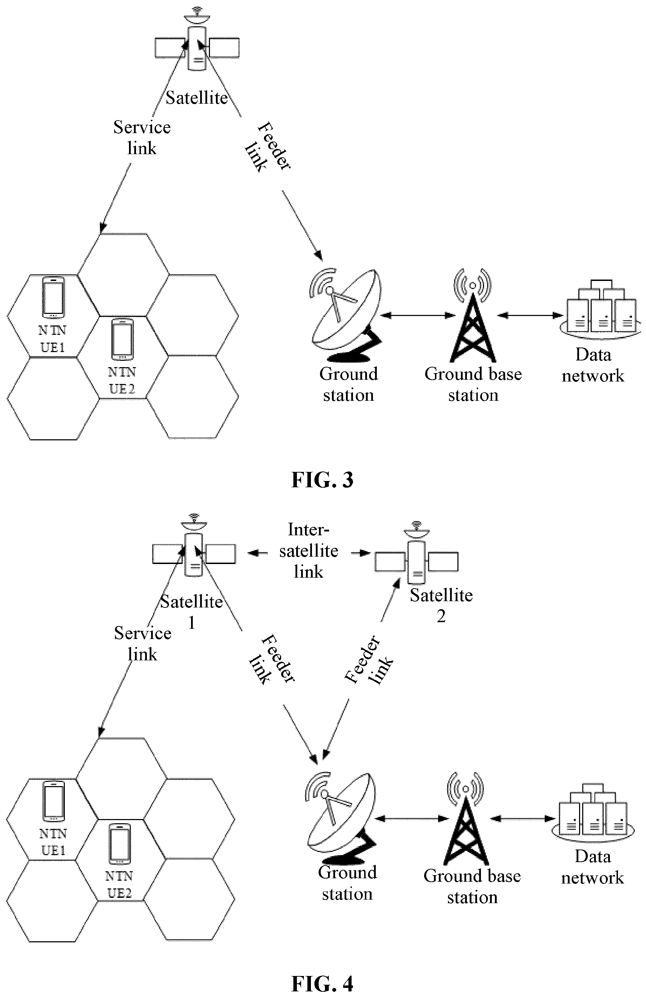

FIG. 3 is a schematic diagram of a transparent forwarding satellite-based non-terrestrial network according to an embodiment. FIG. 4 is a schematic diagram of a regenerative forwarding satellite-based non-terrestrial network according to an embodiment. As shown in FIGS. 3 and 4, a satellite mobile communication system includes a satellite, a ground station, terminal devices, and a terrestrial network device. The satellite communicates with the terminal devices (for example, a UE1 and a UE2) through wireless signals. The satellite is wirelessly connected to the ground station, and such a link is commonly referred to as the feeder link. The satellite generally forms multiple beams, and each beam is equivalent to a cell or a sector in a terrestrial mobile communication system (for example, LTE or NR). The ground station is connected to a network device, and the network device may be, for example, an eNB, an RNC, an NB, a BSC, a BTS, a home base station, a BBU, an access point in a WIFI system, a wireless relay node, a wireless backhaul node, a TRP or a TP, or may be a gNB or a transmission point in a 5G (for example, NR) system, or may be a network node constituting a gNB or a transmission point, such as a BBU, a DU or a drone. In some deployments, the gNB may include a CU and a DU. The CU is used to implement part of the functions of the gNB, and the DU is used to implement part of the functions of the gNB. For example, the CU implements the functions of the RRC and PDCP layers, and the DU implements the functions of the radio link control (RLC), media access control (MAC), and physical (PHY) layers. Since the information of the RRC layer eventually becomes the information of the PHY layer (that is, the information of the RRC layer is sent through the PHY layer) or is transformed from the information of the PHY layer, in such an architecture, higher-layer signaling, such as RRC layer signaling or PDCP layer signaling, may also be considered as being sent by the DU or by the DU + RU. It is to be understood that an access network device may be a CU node, a DU node, or a device including a CU node and a DU node. In addition, the CU may be regarded as a network device in a radio access network (RAN) or may be regarded as a network device in a core network (CN), which is not limited herein.

The terminal device involved in the embodiments of the present application, also referred to as a user equipment, is an entity at the user side for receiving/transmitting signals, and is used to send an uplink signal to a network terminal device or receive a downlink signal from the network device. The terminal device includes a device providing voice and/or data connectivity for a user, for example, a handheld device having wireless connectivity capabilities or a processing device connected to a wireless modem. The terminal device may communicate with the core network via a RAN and exchange voice and/or data with the RAN. The terminal device may include a UE, a vehicle-to-everything (V2X) terminal device, a wireless terminal device, a mobile terminal device, a device-to-device (D2D) terminal device, a machine-to-machine/machine-type communications (M2M/MTC) terminal device, an Internet of Things (IoT) terminal device, a subscriber unit, a subscriber station, a mobile station, a remote station, an access point, a remote terminal, an access terminal, a user terminal, a user agent, a user device, a wearable device, an in-vehicle device or a drone. The above terminal devices, when located on a vehicle (for example, placed or installed in a vehicle), may be regarded as in-vehicle terminal devices, and the in-vehicle terminal device is also referred to as, for example, an on-board unit (OBU).

In an embodiment, the following measurement report trigger events may be defined:
1) Time condition T1: time window when a UE is capable of performing CHO on a candidate cell. From a preset time point, the UE may perform CHO to a specific cell within a service time range of a satellite to a specific cell.
2) Location condition L1: a distance threshold from a UE to a source cell and a distance threshold from a UE to a candidate cell. The UE may perform CHO according to the distance thresholds.
3) Reference signal condition A3: the signal quality of a neighboring cell exceeding the signal quality of a designated cell by an offset. The designated cell is a primary serving cell of a master cell group (MCG) or a secondary cell group (SCG). This event is typically used in intra-frequency or inter-frequency handover procedures. Event A3 provides a handover trigger mechanism based on a relative measurement result.
4) Reference signal condition A4: the signal quality of a neighboring cell becoming better than a defined threshold. This event may be used in handover procedures that do not depend on the coverage of a serving cell. For example, due to the load condition rather than the wireless condition in the load balancing feature, it is decided to hand over the UE from the serving cell. In this case, the UE only needs to verify whether a target cell is better than a certain signal level threshold and can provide sufficient coverage.
5) Reference signal condition A5: the signal quality of a certain cell becoming worse than a threshold 1, and the signal quality of a neighboring cell becoming better than a threshold 2. This condition is typically used in intra-frequency or inter-frequency handover procedures. Event A5 provides a handover trigger mechanism based on an absolute measurement result.

The time condition or the location condition may be configured together with one of the reference signal conditions (A3, A4 or A5), for example, T1 + A3/A4/A5 or L1 + A3/A4/A5.

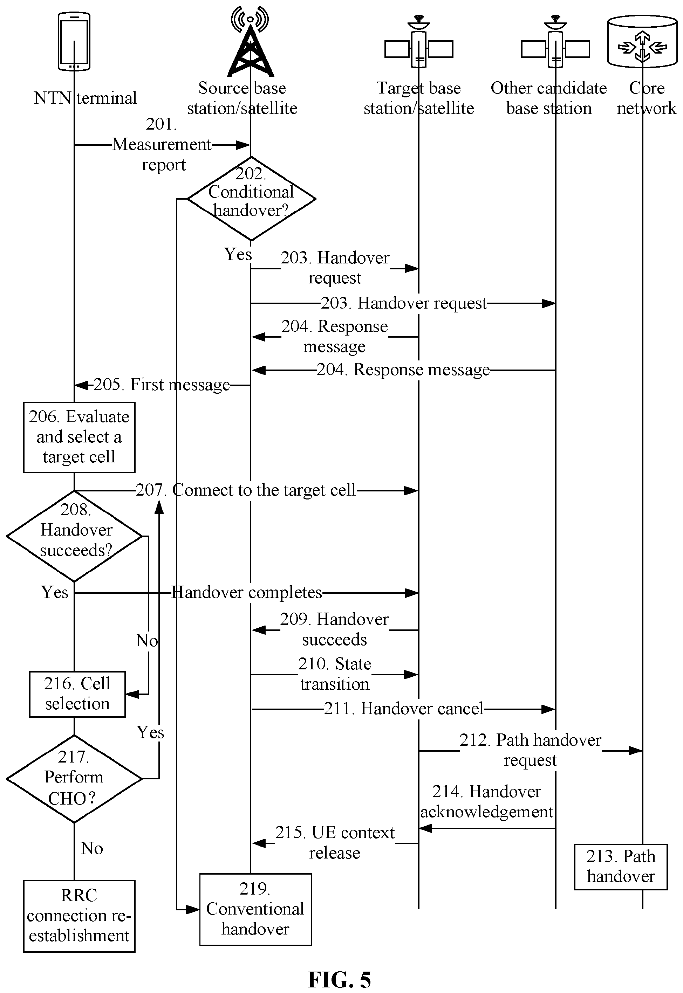

FIG. 5 is a schematic diagram of the implementation of a conditional handover procedure according to an embodiment. The method for a conditional handover in this embodiment may be achieved through the interaction between a satellite and a terminal device. In actual application, there may be multiple terminal devices, and one terminal device is used as an example for illustrative description here. As shown in FIG. 5, the conditional handover procedure includes 201 to 219.

In 201, a UE sends a measurement report, where the measurement report includes location information of the UE.

It is to be noted that the conditional handover includes two scenarios: from a terrestrial network to a non-terrestrial network (NTN), and from a non-terrestrial network to a non-terrestrial network. If the source cell of the UE belongs to a terrestrial network, the UE sends a measurement report to the source base station where the source cell is located, the source base station selects a candidate base station, and the candidate base station is capable of being connected to a satellite and thus belongs to an NTN. If the source cell belongs to an NTN, that is, the source base station is connected to a satellite, the UE sends a measurement report to the satellite, the satellite/source base station selects a candidate base station, and the candidate base station is connected to a satellite and thus belongs to an NTN.

For ease of description, the present application does not strictly distinguish between the base station and the satellite, that is, the satellite in the present application may also be referred to as the base station. However, it is to be noted that both the candidate base station and the target base station are connected to the satellite. For a transparent forwarding satellite, since the satellite has the capabilities of frequency conversion, signal amplification, and filtering, signal processing is performed at the ground base station connected to the satellite, and the signal sent/received by the satellite is processed by the ground base station. For a regenerative forwarding satellite, if the centralized unit (CU) is located in a terrestrial network, RRC signaling is also processed by the terrestrial network. Handover between different satellites requires interaction through an inter-satellite link (regenerative forwarding) or a ground station/base station (transparent forwarding). The present application mainly takes the service link handover (cell/satellite/base station handover) as an example for illustration, and the method provided by the present application may also be applied to the handover involving the feeder link (terrestrial station handover).

It is to be noted that, before the UE sends the measurement report, the source base station/satellite where the UE is located (or a satellite corresponding to the base station where the UE is located) sends measurement configuration information to the UE, and the UE performs measurement according to the measurement configuration and sends the measurement report, where the measurement report includes the location information of the UE. The satellite determines that the UE has a satellite access capability according to RRC signaling reported through the UE capability, and the satellite sends a measurement configuration to the UE. The UE determines that the current cell is a satellite cell through the indication of a system message such as a system information block 19 (SIB 19), that is, the UE determines that the UE can connect to the satellite through an Uu interface in the current cell for communication; and the UE receives the measurement configuration and sends the measurement report to the satellite through a satellite transceiver function module, where the measurement report further includes a measurement result of a serving cell and a neighboring cell.

It is to be noted that the access and mobility function (AMF) of a core network element sends UE context to the source base station, where the UE context includes information about roaming and access restrictions, and the information is provided during the establishment of connection or the last update of a tracking area (TA).

It is to be noted that the conditional handover in the present application is illustrated by taking the RAN handover as an example, that is, the handover preparation and handover execution stages do not involve the interaction with the core network. In addition, the conditional handover procedure in the present application mainly targets the service link, that is, the link handover between the UE and the satellite, and does not involve the handover procedure of the feeder link.

In 202, the source base station/satellite determines whether to adopt the conditional handover. If the conditional handover is determined to be adopted, the procedure proceeds to 203; otherwise, the procedure proceeds to 219.

It is to be noted that the source cell where the UE is located may be a terrestrial network (TN) or a non-terrestrial network (NTN), and the target cell is a non-terrestrial network. If the source cell is a terrestrial network, the source base station determines the conditional handover and selects a candidate base station, and the candidate base station is capable of being connected to the satellite, that is, the candidate base station belongs to the NTN.

The source base station/satellite receives the measurement report sent by the UE and determines whether to adopt the conditional handover according to one of the following conditions: the location of the UE, the UE capability, an operator policy, or a service quality (QoS) requirement. When the UE is located in an area that is difficult to be covered by the terrestrial network but belongs to the coverage area of the NTN, the UE supports NTN communications, and the operator aims to offload traffic (for example, to achieve load balancing) and/or the service of the UE requires a short delay, then the satellite determines to adopt the conditional handover; otherwise, the conventional handover procedure may be adopted.

In 203, the satellite sends a request message to a candidate base station.

The satellite may select the candidate base station according to one of the following conditions: the measurement report, a base station location, a handover requirement, a base station capability (such as the capability to connect to a satellite ground station), or the candidate base station determining a candidate cell. The satellite sends a conditional handover request to the candidate base station. The number of candidate base stations is one or more. If multiple candidate base stations exist, the satellite sends a conditional handover request message to each candidate base station. The satellite interacts with the candidate base station and acquires a candidate cell list.

The request message at least includes: a target cell identifier, a key, a cell-radio network temporary identifier (C-RNTI) of a UE in the source base station, a radio resource management (RRM) configuration (including UE inactive time), an access layer configuration (including antenna information and a downlink carrier frequency), a mapping rule between QoS flows and data radio bearers (DRBs), an SIB1 from the source base station, UE capabilities for different radio access technologies (RATs), and packet data unit (PDU) session-related information, and may include beam measurement information reported by the UE. The PDU session-related information includes slice information and a QoS profile of a QoS flow.

It is to be noted that one satellite may be connected to multiple ground base stations, or one base station may be connected to multiple satellites, and the conditional handover may be handover on the base station, handover on the satellite, or handover on the cell (both the base station and the satellite remain unchanged).

In 204, the source base station/satellite acquires configuration information of at least one candidate cell.

The candidate base station first performs access control. If the slice information is sent to the candidate base station, slice-related access control is required to be performed. If a PDU session is associated with an unsupported slice, the candidate base station shall reject such a PDU session.

The candidate base station sends the configuration information of the at least one candidate cell to the source base station/satellite, where the configuration information includes one of a cell identifier, cell resource configuration information, an SMTC or CSI-RS resource location information. The cell identifier is used to indicate a candidate cell. The resource configuration information is used for the UE to connect to the candidate cell meeting the execution condition. The resource configuration is a random access resource configuration or a PUSCH resource configuration. The SMTC or the CSI-RS is used for the UE to evaluate the signal quality of a candidate cell. Each candidate base station needs to send the configuration information of each candidate cell to the source base station/satellite.

The RRM configuration may include SSB-related beam measurement information (for Layer 3 mobility) and a CSI-RS of a reporting cell if both types of measurements are available. In addition, if carrier aggregation is configured, the RRM configuration may include a list of best cells on each frequency, from which measurement information may be obtained. The RRM measurement information may further include beam measurement for a cell belonging to the target base station.

The common random access channel configuration of the beams in the target cell is only associated with the SSB. A network may have a dedicated RACH configuration associated with the SSB and/or a dedicated RACH configuration associated with the CSI-RS within a unit. The target base station may only configure one of the following RACH configurations in a "handover command" to enable a terminal to access the target cell:
i) common RACH configuration;
ii) common RACH configuration + dedicated RACH configuration associated with the SSB;
iii) common RACH configuration + dedicated RACH configuration associated with the CSI-RS.

A dedicated RACH configuration allocates RACH resources and sets a quality threshold for using these resources. When dedicated RACH resources are provided, the dedicated RACH resources are prioritized by the UE, and the UE does not perform a handover to contention-based RACH resources as long as the quality threshold of these dedicated resources is met. The order of accessing the dedicated RACH resources depends on the UE implementation.

In 205, the satellite sends a first message.

The first message includes a conditional handover execution condition, and the execution condition includes a time condition or a location condition. The time condition defines a time window when the UE is capable of performing CHO on a candidate cell, that is, the UE starts evaluating A3/A4/A5 from a time tl-Threshold, and if the execution condition is met within a limited duration, the UE performs handover to a designated neighboring cell. The location condition defines two distance thresholds including a distance threshold from the UE to the source cell and a distance threshold from the UE to the candidate cell, and the UE may perform CHO according to the two distance thresholds, that is, when the distance from the UE to the serving cell is greater than a threshold 1 and the distance from the UE to the designated neighboring cell is less than a threshold 2, the UE performs handover to the designated neighboring cell.

Further, the first message also includes a reference signal condition. The reference signal condition includes one of A3, A4 or A5. When the reference signal quality of the neighboring cell exceeds the reference signal quality of the designated cell (such as the serving cell) by an offset, the reference signal condition A3 is met. When the reference signal quality of the neighboring cell becomes better than a defined threshold, the reference signal condition A4 is met. When the reference signal quality of the designated cell becomes worse than the threshold 1 and the signal quality of the neighboring cell becomes better than the threshold 2, the reference signal condition A5 is met. The reference signal includes at least one of an SRS or a CSI-RS. The measurement includes one of an RSRP, an RSRQ, or an SINR.

The time condition or the location condition is configured together with one of the reference signal conditions (A3, A4 or A5), that is, the conditional handover requires at least two conditions to be met simultaneously.

It is to be noted that the first message may be directly sent by the satellite and is not carried in the first message but carried through other information or signaling, and the present application does not specifically limit the carrying manner of the first message here.

In 206, the UE evaluates the at least one candidate cell and selects a target cell.

After the UE receives the CHO configuration, the UE maintains the connection with the source base station/satellite and starts evaluating the CHO execution conditions of the at least one candidate cell. The target cell needs to meet at least two conditions: the time condition T1 and the reference signal condition A3/A4/A5, or the location condition L1 and the reference signal condition A3/A4/A5. The time condition, the location condition, and the reference signal condition A3/A4/A5 are as described in 205, and the specific parameter values are sent by the source base station/satellite to the UE through RRC signaling.

If multiple candidate cells meet the execution condition, the UE may select, as the target cell, a cell meeting one of the following conditions: the time condition with the longest duration, the best location (for example, the nearest candidate cell), or the highest quality (for example, a candidate cell with the highest signal quality according to A3/A4/A5).

In 207, the UE disconnects the connection with the source cell and connects to the target cell.

If at least one CHO candidate cell meets the corresponding CHO execution condition, the UE detaches from the source base station/satellite, applies the stored resource configuration of the selected candidate cell, connects to the candidate cell, and sends a message to the target base station/satellite to indicate the completion of the conditional handover procedure. After the conditional handover procedure is successfully completed, the UE releases the stored CHO configuration. If the RACH-less-based handover is adopted, the UE directly sends a PUSCH in the target cell according to the received configuration information; otherwise, the UE initiates a random access procedure in the target cell by using a collision-free resource in the configuration information. If the RACH-less-based handover fails, the UE may adopt the RACH-based handover or initiate a cell selection procedure to select a cell.

In 208, the UE decides whether the handover succeeds. If the handover succeeds, the procedure proceeds to 209; otherwise, the procedure proceeds to 216.

If the UE has established an RRC connection with the target cell, it indicates that the handover succeeds.

In 209, the target cell indicates that the handover succeeds.

When the target cell establishes an RRC connection with the UE, it indicates that the handover succeeds, and the target cell indicates to the satellite/source base station through the target base station that the handover succeeds.

In 210, the satellite/source base station sends a state transition message to the target base station.

For a DRB that adopts PDCP state preservation, the state transition message conveys an uplink PDCP sequence number (SN) receiver state and a downlink PDCP SN sender state. The uplink PDCP SN receiver state at least includes the PDCP SN of the first missing uplink PDCP service data unit (SDU), and may include a bitmap of the receiver state of the out-of-order uplink PDCP SDU that the terminal needs to retransmit in the target cell. The downlink PDCP SN sender state indicates the next PDCP SN to be allocated by the target base station to a new PDCP SDU that has no SN yet.

It is to be noted that, if the DAPS is adopted, the transition message may be sent before the UE connects to the target cell.

In 211, the satellite/source base station sends a handover cancel message to other candidate base stations.

The handover cancel message is used to cancel the conditional handover between the UE and other base stations.

In 212, the target base station sends a path handover request message to the core network.

The core network is triggered to hand over a downlink data path to the target base station and establish an interface instance to the target base station.

In 213, the core network hands over the downlink data path to the target base station.

The user plane function (UPF) of the core network sends one or more "end flag" messages to the source base station on the old path of each PDU session/tunnel and then releases the user plane/transport layer resources for the source base station.

In 214, the core network sends a path handover request acknowledgment message.

In 215, the target base station sends a UE context release message.

The context release message is used to notify the source base station/satellite that the handover succeeds and the source base station/satellite may release radio and control plane-related resources associated with the UE context; and any ongoing data forwarding may continue.

In 216, the UE initiates a cell selection procedure to select a cell.

When the initial CHO execution attempt fails (for example, a radio link failure, a reconfiguration failure, or an integrity check failure), the UE performs cell selection. If the selected cell is a CHO candidate cell and the network configures the UE to attempt CHO after the CHO failure, the UE attempts to re-perform CHO once; otherwise, the UE performs a connection re-establishment procedure, that is, the UE initiates an RRC connection re-establishment procedure for the target cell, or performs an RRC connection establishment procedure if the context of the UE cannot be retrieved.

The UE first selects the target cell from previously registered cells.

In 217, whether to perform a conditional handover is determined. If the conditional handover is determined to be performed, the procedure proceeds to 207; otherwise, the procedure proceeds to 218.

If the cell selected by the UE belongs to a candidate CHO cell, and the satellite/source base station instructs the UE to attempt to re-perform CHO once after CHO failure, the UE attempts to re-perform CHO; otherwise, the UE performs an RRC connection re-establishment procedure in the selected cell.

In 218, the UE initiates an RRC connection re-establishment procedure in the selected cell.

If the UE context information can be retrieved in the selected cell, the re-establishment is completed; otherwise, the UE connects to the selected cell through an RRC connection procedure.

In 219, a conventional handover procedure is initiated.

When the satellite determines not to adopt the conditional handover, the satellite sends a handover command, such as an *RRCReconfiguration* message, to the UE to enter the conventional handover procedure.

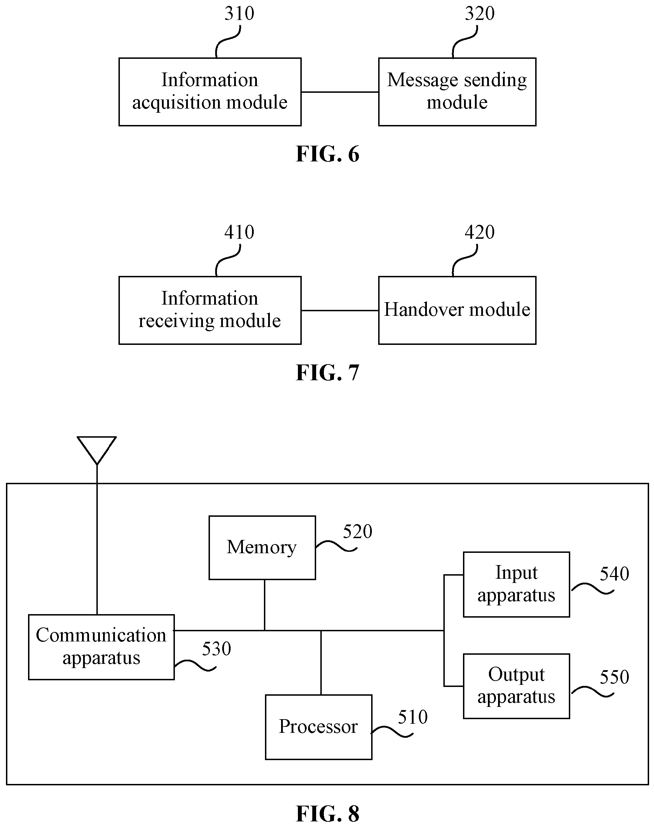

An embodiment of the present application further provides a conditional handover apparatus. FIG. 6 is a structure diagram of a conditional handover apparatus according to an embodiment. As shown in FIG. 6, the conditional handover apparatus includes an information acquisition module 310 and a message sending module 320.

The information acquisition module 310 is configured to, in response to determining that a second communication node performs a conditional handover, acquire configuration information of at least one candidate cell.

The message sending module 320 is configured to send a first message to the second communication node, where the first message includes the configuration information of the at least one candidate cell and a conditional handover execution condition, the first message is used to instruct the second communication node to select at least one candidate cell meeting the execution condition from the at least one candidate cell as a target cell, and to perform the handover to the target cell according to the configuration information.

In response to the target cell being a non-terrestrial network cell, the execution condition includes a reference signal condition and an execution state condition.

The conditional handover apparatus in this embodiment may instruct the second communication node through the first message to evaluate each candidate cell according to the execution condition, and when at least one candidate cell meeting the execution condition is found, a candidate cell is taken as the target cell of the conditional handover, and a handover to the target cell is performed according to the configuration information of the target cell. The execution condition and the at least one candidate cell are not determined in real-time calculation but are pre-configured before the conditional handover is performed, so that the signaling overhead is relatively reduced and the processing delay is reduced. Moreover, in addition to the reference signal condition, the execution condition also takes into account the location condition or the time condition of a satellite service according to the characteristics of NTN communications. On the basis of the above, the success rate of the conditional handover can be improved, the second communication node can be prevented from performing handover prematurely or belatedly, frequent handovers can be avoided, and the service quality can be improved.

In an embodiment, in response to the at least one candidate cell meeting the execution condition including a terrestrial network candidate cell and a non-terrestrial network candidate cell, the target cell is the terrestrial network candidate cell.

In an embodiment, the terrestrial network candidate cell and the non-terrestrial network candidate cell are distinguished through a field in a cell system broadcast message and correspond to different execution conditions.

In an embodiment, the apparatus further includes a handover determination module.

The handover determination module is configured to determine whether the second communication node performs the conditional handover according to at least one of: a measurement report, the capability of the second communication node, the location of the second communication node, or a satellite ephemeris.

The capability of the second communication node includes the capability to support non-terrestrial network communications and GNSS positioning.

In an embodiment, the configuration information of the at least one candidate cell includes a cell identifier and cell resource configuration information.

Alternatively, the configuration information of the at least one candidate cell includes a cell identifier, cell resource configuration information, and at least one of an SMTC or CSI-RS resource location information.

In response to the at least one candidate cell meeting the execution condition being a non-terrestrial network cell, at least two SMTCs are provided.

In an embodiment, the execution state condition includes at least one of a time condition or a location condition. The time condition is used to indicate a time window in which the second communication node is capable of performing the conditional handover on a candidate cell.

The location condition is used to indicate a first distance threshold from the second communication node to a source cell and a second distance threshold from the second communication node to the candidate cell.

In an embodiment, the reference signal condition is a measurement report trigger event for the conditional handover.

In an embodiment, the first message is sent through RRC reconfiguration signaling.

In an embodiment, the execution condition is determined according to satellite ephemeris information, the location of the second communication node, and a reference signal reception parameter.

The reference signal reception parameter includes an RSRP or an RSRQ.

In an embodiment, the apparatus further includes a range determination module.

The range determination module is configured to determine a time range of the execution condition.

The first message is used to instruct the second communication node to perform a handover to a target cell meeting the execution condition within the time range.

In an embodiment, the apparatus further includes an information sending module.

The information sending module is configured to send conditional handover configuration information, where the conditional handover configuration information includes satellite ephemeris information, a common TA parameter, a start time, and a validity duration.

In an embodiment, the reference signal condition includes at least one of the following conditions.

A reference signal quality of a neighboring cell exceeds a reference signal quality of a designated cell by a preset offset.

A reference signal quality of a neighboring cell is higher than a preset threshold.

A reference signal quality of a designated cell is lower than a first threshold and a reference signal quality of a neighboring cell is higher than a second threshold.

The reference signal includes at least one of an SSB or a CSI-RS.

In an embodiment, the apparatus further includes a configuration sending module.

The configuration sending module is configured to send a user plane configuration of the target cell to the second communication node, where the user plane configuration includes: adding a satellite-terrestrial round-trip time to a timer time of a user plane.

In an embodiment, the apparatus further includes a state sending module.

The state sending module is configured to send state information, where the state information includes a PDCP number, and the state information is used to indicate the sending state of uplink and downlink data over a Uu air interface.

In an embodiment, the apparatus further includes a forwarding module.

The forwarding module is configured to, in response to no DAPS handover being configured, forward data to the candidate base station after the second communication node accesses a target base station, or in response to a DAPS handover being configured, forward data to the candidate base station before the second communication node completes handover.

In an embodiment, the apparatus further includes a sending module.

The sending module is configured to, after the second communication node performs the handover to the target cell, send a state transition message to the target base station, and send a handover cancel message to a candidate base station.

The conditional handover apparatus provided in this embodiment and the method for a conditional handover provided in the preceding embodiments belong to the same inventive concept. For technical details not described in detail in this embodiment, reference may be made to any one of the preceding embodiments, and this embodiment has the same beneficial effects as the method for a conditional handover performed.

An embodiment of the present application further provides a conditional handover apparatus. FIG. 7 is a structure diagram of a conditional handover apparatus according to an embodiment. As shown in FIG. 7, the conditional handover apparatus includes an information receiving module 410 and a handover module 420.

The information receiving module 410 is configured to receive a first message, where the first message includes configuration information of at least one candidate cell and a conditional handover execution condition.

The handover module 420 is configured to select at least one candidate cell meeting the execution condition from the at least one candidate cell as a target cell and perform the handover to the target cell according to the configuration information.

In response to the target cell being a non-terrestrial network cell, the execution condition includes a reference signal condition and an execution state condition.

The conditional handover apparatus in this embodiment may instruct the second communication node through the first message to evaluate each candidate cell according to the execution condition, and when the second communication node finds at least one candidate cell meeting the execution condition, the second communication node may take the candidate cell as the target cell of the conditional handover and performs handover to the target cell according to the configuration information of the target cell. The execution condition and the at least one candidate cell are not determined in real-time calculation but are pre-configured before the conditional handover is performed, so that the signaling overhead is relatively reduced and the processing delay is reduced. Moreover, in addition to the reference signal condition, the execution condition also takes into account the location condition or the time condition of a satellite service according to the characteristics of NTN communications. On the basis of the above, the success rate of the conditional handover can be improved, the second communication node can be prevented from performing handover prematurely or belatedly, frequent handovers can be avoided, and the service quality can be improved.

In an embodiment, the handover module 420 includes a selection unit.

The selection unit is configured to, in response to the at least one candidate cell meeting the execution condition including a terrestrial network candidate cell and a non-terrestrial network candidate cell, preferentially select the terrestrial network candidate cell as the target cell.

In an embodiment, the handover module 420 includes a handover unit.

The handover unit is configured to perform the handover to the target cell in a random access procedure-less manner according to the configuration information and establish an RRC connection with the target cell; and in response to the random access procedure-less handover failing or the random access procedure-less handover being disabled, perform the conditional handover to the target cell based on a random access procedure, where the random access resource is a collision-free dedicated resource.

In an embodiment, the apparatus further includes an unconditional handover module.

The unconditional handover module is configured to, during the process where the second communication node performs the conditional handover, in response to a handover command for an unconditional handover being received from a first communication node, perform the unconditional handover.

In an embodiment, the apparatus further includes a cell selection module and a re-performing module.

The cell selection module is configured to, in response to the conditional handover failing, initiate a cell selection procedure to select a cell.

The re-performing module is configured to, in response to the selected cell being a candidate cell and an attempt to re-enable the conditional handover being enabled when the conditional handover fails, re-perform the conditional handover; otherwise, initiate an RRC connection re-establishment procedure in the selected cell.

In an embodiment, the handover module 420 includes a connection unit.

The connection unit is configured to, in response to a DAPS being configured, establish a connection with the target cell while maintaining a connection with a source cell, and release the connection with the source cell after accessing the target cell; or in response to no DAPS being configured, disconnect a connection with a source cell and connect the target cell.

The conditional handover apparatus provided in this embodiment and the method for a conditional handover provided in the preceding embodiments belong to the same inventive concept. For technical details not described in detail in this embodiment, reference may be made to any one of the preceding embodiments, and this embodiment has the same beneficial effects as the method for a conditional handover performed.

An embodiment of the present application further provides a communication node. FIG. 8 is a structure diagram of the hardware of a communication node according to an embodiment. As shown in FIG. 8, the communication node provided by the present application includes a processor 510 and a memory 520. One or more processors 510 may be provided in the communication node, and one processor 510 is illustrated as an example in FIG. 8. The memory 520 is configured to store one or more programs. The one or more programs are executed by the one or more processors 510 to cause the one or more processors 510 to perform the method for a conditional handover in the embodiments of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected via a bus or in other manners, and the connection via a bus is illustrated as an example in FIG. 8.

The input apparatus 540 may be configured to receive input digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving and communication under the control of the processor 510.

As a computer-readable storage medium, the memory 520 may be configured to store software programs, computer-executable programs, and modules, such as program instructions/modules (for example, the information acquisition module 310 and the message sending module 320 in the conditional handover apparatus) corresponding to the method for a conditional handover in the embodiments of the present application. The memory 520 may include a program storage region and a data storage region. The program storage region may store an operating system and at least one application program required by functions. The data storage region may store data created according to the use of the communication node. Additionally, the memory 520 may include a high-speed random-access memory, and may also include a nonvolatile memory such as at least one magnetic disk memory, a flash memory, or other nonvolatile solid-state memory. In some examples, the memory 520 may further include memories remotely disposed relative to the processor 510. These remote memories may be connected to the communication node via a network. Examples of the preceding network include, but are not limited to, the Internet, an intranet, a local area network, a mobile communication network, and a combination thereof.

An embodiment of the present application provides a storage medium. The storage medium is configured to store a computer program which, when executed by a processor, causes the processor to perform the method for a conditional handover according to any embodiment of the present application. The method includes: in response to determining that a second communication node performs a conditional handover, acquiring configuration information of at least one candidate cell; and sending a first message to the second communication node, where the first message includes the configuration information of the at least one candidate cell and a conditional handover execution condition, the first message is used to instruct the second communication node to select at least one candidate cell meeting the execution condition from the at least one candidate cell as a target cell and to perform the handover to the target cell according to the configuration information, and in response to the target cell being a non-terrestrial network cell, the execution condition includes a reference signal condition and an execution state condition. Alternatively, the method includes: receiving a first message, where the first message includes configuration information of at least one candidate cell and a conditional handover execution condition; and selecting at least one candidate cell meeting the execution condition from the at least one candidate cell as a target cell and performing handover to the target cell according to the configuration information; where in response to the target cell being a non-terrestrial network cell, the execution condition includes a reference signal condition and an execution state condition.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system, apparatus or device or any combination thereof. Examples of the computer-readable storage medium include (a non-exhaustive list of) an electrical connection having one or more wires, a portable computer disk, a hard disk, a random-access memory (RAM), a read-only memory (ROM), an electrically erasable programmable read-only memory (EPROM), a flash memory, an optical fiber, a portable compact disk read-only memory (CD-ROM), an optical memory, a magnetic memory, or any appropriate combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier, in which computer-readable program codes are carried. The signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted by using any appropriate medium including, but not limited to, a wireless medium, a wire, an optical cable, a radio frequency (RF), or any appropriate combination thereof.

Computer program codes for executing the operations of the present application may be written in one or more programming languages or a combination of multiple programming languages. The programming languages include object-oriented programming languages such as Java, Smalltalk, C++, Ruby, and Go and conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are example embodiments of the present application and are not intended to limit the scope of the present application.

It is to be understood by those skilled in the art that the term "user equipment" encompasses any appropriate type of wireless user device, such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. The computer program may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A method for a conditional handover, performed by a first communication node and comprising:
in response to determining that a second communication node performs a conditional handover, acquiring configuration information of at least one candidate cell; and
sending a first message to the second communication node, wherein the first message comprises the configuration information of the at least one candidate cell and a conditional handover execution condition, the first message is used to instruct the second communication node to select at least one candidate cell meeting the execution condition from the at least one candidate cell as a target cell and to perform the conditional handover to the target cell according to the configuration information;
wherein in response to the target cell being a non-terrestrial network cell, the execution condition comprises a reference signal condition and an execution state condition.

2. The method of claim 1, wherein in response to the at least one candidate cell meeting the execution condition comprising a terrestrial network candidate cell and a non-terrestrial network candidate cell, the target cell is the terrestrial network candidate cell.

3. The method of claim 2, wherein the terrestrial network candidate cell and the non-terrestrial network candidate cell are distinguished through a field in a cell system broadcast message and correspond to different execution conditions.

4. The method of claim 1, further comprising:
determining whether the second communication node performs the conditional handover according to at least one of: a measurement report, a capability of the second communication node, a location of the second communication node, or a satellite ephemeris;
wherein the capability of the second communication node comprises a capability to support non-terrestrial network communications and a capability to support global navigation satellite system, GNSS, positioning.

5. The method of claim 1, wherein,
the configuration information of the at least one candidate cell comprises a cell identifier and cell resource configuration information; or the configuration information of the at least one candidate cell comprises the cell identifier, the cell resource configuration information, and at least one of a synchronization signal/physical broadcast channel block measurement timing configuration or channel state information reference signal, CSI-RS, resource location information; and
in response to the at least one candidate cell meeting the execution condition being a non-terrestrial network cell, at least two synchronization signal/physical broadcast channel block measurement timing configurations are provided.

6. The method of claim 1, wherein the execution state condition comprises at least one of:
a time condition used to indicate a time window in which the second communication node is capable of performing the conditional handover on a candidate cell; or
a location condition used to indicate a first distance threshold from the second communication node to a source cell and a second distance threshold from the second communication node to the candidate cell.

7. The method of claim 1, wherein the reference signal condition is a measurement report trigger event for the conditional handover.

8. The method of claim 1, wherein the first message is sent through radio resource control, RRC, reconfiguration signaling.

9. The method of claim 1, wherein the execution condition is determined according to satellite ephemeris information, a location of the second communication node, and a reference signal reception parameter; and
wherein the reference signal reception parameter comprises a reference signal received power, RSRP, or a reference signal received quality, RSRQ.

10. The method of claim 1, further comprising:
determining a time range of the execution condition;
wherein the first message is used to instruct the second communication node to perform the conditional handover to the target cell meeting the execution condition within the time range.

11. The method of claim 1, further comprising:
sending conditional handover configuration information, wherein the conditional handover configuration information comprises satellite ephemeris information, a common timing advance, TA, parameter, a start time, and a validity duration.

12. The method of claim 1, wherein the reference signal condition comprises at least one of:
a reference signal quality of a neighboring cell exceeding a reference signal quality of a designated cell by a preset offset;
a reference signal quality of a neighboring cell being higher than a preset threshold; or
a reference signal quality of a designated cell being lower than a first threshold and a reference signal quality of a neighboring cell being higher than a second threshold; and
wherein a reference signal comprises at least one of a synchronization signal block, SSB, or a CSI-RS.

13. The method of claim 1, further comprising:
sending a user plane configuration of the target cell to the second communication node, wherein the user plane configuration comprises: adding a satellite-terrestrial round-trip time to a timer time of a user plane.

14. The method of claim 1, further comprising:
sending state information, wherein the state information comprises a packet data convergence protocol, PDCP, number and is used to indicate a sending state of uplink and downlink data over a Uu air interface.

15. The method of claim 1, further comprising:
in response to no dual active protocol stack, DAPS, handover being configured, forwarding data to a candidate base station after the second communication node accesses a target base station; or
in response to a DAPS handover being configured, forwarding data to the candidate base station before the second communication node completes the conditional handover.

16. The method of claim 1, further comprising:
after the second communication node performs the conditional handover to the target cell, sending a state transition message to a target base station and sending a handover cancel message to a candidate base station.

17. A method for a conditional handover, performed by a second communication node and comprising:
receiving a first message, wherein the first message comprises configuration information of at least one candidate cell and a conditional handover execution condition; and
selecting at least one candidate cell meeting the execution condition from the at least one candidate cell as a target cell and performing the conditional handover to the target cell according to the configuration information;
wherein in response to the target cell being a non-terrestrial network cell, the execution condition comprises a reference signal condition and an execution state condition.

18. The method of claim 17, wherein selecting the at least one candidate cell meeting the execution condition from the at least one candidate cell as the target cell comprises:
in response to the at least one candidate cell meeting the execution condition comprising a terrestrial network candidate cell and a non-terrestrial network candidate cell, selecting the terrestrial network candidate cell as the target cell.

19. The method of claim 17, wherein performing the conditional handover to the target cell according to the configuration information comprises:
according to the configuration information, performing, in a random access procedure-less manner, the conditional handover to the target cell to establish a radio resource control, RRC, connection with the target cell; and
in response to the random access procedure-less handover failing or the random access procedure-less handover being disabled, performing the conditional handover to the target cell based on a random access procedure, wherein a random access resource is a collision-free dedicated resource.

20. The method of claim 17, further comprising:
during a process where the second communication node performs the conditional handover, in response to a handover command for an unconditional handover being received from a first communication node, performing the unconditional handover.

21. The method of claim 17, further comprising:
in response to the conditional handover failing, initiating a cell selection procedure to select a cell; or
in response to the selected cell being a candidate cell and an attempt to re-enable the conditional handover being enabled when the conditional handover fails, re-performing the conditional handover; otherwise, initiating a radio resource control, RRC, connection re-establishment procedure in the selected cell.

22. The method of claim 17, wherein performing the conditional handover to the target cell according to the configuration information comprises:
in response to a dual active protocol stack, DAPS, being configured, establishing a connection with the target cell while maintaining a connection with a source cell, and releasing the connection with the source cell after accessing the target cell; or
in response to no DAPS being configured, disconnecting a connection with a source cell and connecting to the target cell.

23. A communication node, comprising:
at least one processor; and
a storage apparatus configured to store at least one program;
wherein the at least one program, when executed by the at least one processor, causes the at least one processor to perform the conditional handover method of any one of claims 1 to 22.

24. A computer-readable storage medium, which is configured to store a computer program which, when executed by a processor, causes the processor to perform the conditional handover method of any one of claims 1 to 22.
